# EUROPEAN PATENT APPLICATION

(11) **EP 2 392 719 A1**
(43) Date of publication of application: **07.12.2011**
(21) Application number: 10164612.3
(22) Date of filing: 01.06.2010
(51) Int. Cl.: D06F 37/26

(54) **Assembly method and assembly apparatus for assembly the washing group of a laundry washing machine**

(71) Applicant: Electrolux Home Products Corporation N.V., 1130 Brussels (BE)
(72) Inventor: Buso, Danny, 33080, Porcia (PN) - Italy (IT); Zanello, Fabio, 33080, Porcia (PN) - Italy (IT); Breese, Kevin, 33080, Porcia (PN) - Italy (IT)
(74) Representative: Nardoni, Andrea

(57) **Abstract**

The present invention concerns an assembly method of the washing group (1) of a laundry washing machine comprising a washing tub (2) and a rotatable drum (3); the tub (2) comprises a rear half-shell (4) and a front half-shell (5) made of plastic and coupled one another in watertight manner, The method comprises: placing the rear half-shell (4) into a first supporting template (6), in a coupling position in which a perimetrical annular rim (4a) of the rear half-shell (4) is faced to the outside of first supporting template (6); fitting/inserting the drum (3) into the rear half-shell (4); placing the front half-shell (5) of the washing tub (2) into a second supporting template (7), in a coupling position in which a major annular rim (5a) of the front half-shell (5) is faced to the outside of the second supporting template (7); arranging the first (6) and second supporting templates (7) so as to put the perimetrical annular rim (4a) of the rear half-shell (4) in abutment against the major annular rim (5a) of the front half-shell (5). The method comprises, before starting a vibration welding process, the step/stage of measuring the starting distance (d1) between the front opening (3a) of the rotatable drum (3) and the minor annular rim (5b)/front opening of the front half-shell (5). The invention concerns also an assembly apparatus for assembly the washing group (1) of a laundry washing machine comprising a washing tub (2) and a rotatable drum (3); the apparatus comprises a first supporting template (6) for the rear half-shell (4) of the washing tub (2) and a second supporting template (7) for the front half-shell (5) of the washing tub (2). The assembly apparatus comprises a measuring device adapted for measuring the distance between the front opening (3a) of rotatable drum (3) and a minor annular rim (5b)/front opening (2a) of the washing tub 2.

## Description

The present invention relates to an assembly method and to an assembly apparatus for assembly the washing group of a laundry washing machine.

Advantageously the present invention relates to an assembly method and to an assembly apparatus for assembly the the washing group of a front-loading laundry washing machine or of a front-loading laundry washing and drying machine, to which the following description refers purely by way of example without this implying any loss of generality.

As is known, front-loading laundry washing machines generally comprise a substantially parallelepiped-shaped outer box casing structured for resting on the floor and, inside the casing, a washing group which is formed by a substantially bell-shaped washing tub suspended in floating manner inside the casing typically by means of a number of coil springs and shock-absorbers, directly facing a laundry loading and unloading opening realized in the front face of the casing; and by a substantially bell-shaped cylindrical rotatable drum for housing the laundry to be washed, and which is housed inside the washing tub to rotate about its longitudinal axis.

The laundry washing machine of the type referred above usually further comprises: an elastic-deformable bellows which connects the front opening of the bell-shaped washing tub to the loading and unloading opening realized in the front face of the casing; a porthole door which is hinged onto the front face of the casing to rotate to and from a closing position in which the porthole door closes the laundry loading and unloading opening located in the front face of the casing to watertight seal the washing tub; and an electric motor assembly which is usually fixed outside of the washing tub, and is mechanically connected to the rotatable drum for rotating, on command, the rotatable drum about its longitudinal axis inside the washing tub.

In some known front-loading laundry washing machines, the rotatable drum is generally made of stainless steel, whereas the washing tub is generally made of plastic material and is formed by two half-shells coupled one another in watertight manner.

Generally the washing tub is usually formed by a rear half-shell or section, typically substantially cup-shaped, and by a front half-shell or section, typically substantially funnel-shaped, which are structured for being aligned and watertight coupled one another during the assembly of the washing group.

For example, with reference to PCT patent application W02007/115894, the assembly method of the washing group of today's laundry washing machines provides to firstly align the front and the rear half-shells of the washing tub to the rotatable drum, on opposite sides of the latter, so that the front opening of the rotatable drum faces the funnel-shaped front half-shell of the washing tub, and the bottom of the rotatable drum faces the cup-shaped rear half-shell of the washing tub.

Afterwards the assembly method of the washing group provides to put the perimetrical annular rim of the cup-shaped rear half-shell of the washing tub in abutment against the major annular rim of the funnel-shaped front half-shell of the washing tub, so as to enclose the rotatable drum between the front and the rear half-shells of the washing tub; and to weld the major annular rim of the funnel-shaped front half-shell of the washing tub to the perimetrical annular rim of the cup-shaped rear half-shell of the washing tub via a vibration welding process, so as to permanently watertight seal the front half-shell of the washing tub to the rear half-shell of the washing tub.

To ensure an adequate strength, stiffness and watertight capacity to the annular welding bead formed between the front and rear sections of the washing tub, the known assembly method of the washing group provides also to monitor, during the vibration welding process, the progressive reduction of the distance between two reference points aligned parallel to the longitudinal axis of the tub and located, respectively, on the front and on the rear half-shell of the washing tub, so as to stop the vibration welding process only when a sufficient amount of the major annular rim of the funnel-shaped front half-shell of the washing tub has melt onto the perimetrical annular rim of the rear section of the washing tub.

In other words, the known vibration welding process is stopped only when the distance between the two reference points is reduced by a predetermined minimum amount (for example 8 millimetres) sufficient to obtain an annular welding bead of given thickness.

Despite allowing a cheap and cost-effective assembly of the washing tub, the sole monitoring of the welding area of the washing tub, i.e. of reaching of the required minimum distance reduction between the two reference points located, respectively, on the front and on the rear half-shell of the washing tub, does not allow a precise control of the overall axial length of the washing tub. Therefore the above-cited assembly method of the washing tub may occasionally lead to the assembly of washing groups in which the rotatable tub is locally either too close or too far from the inner surface of the washing tub. This situation may cause several problems during normal use of the washing group; for example, if the gap between the front opening of the drum and the front opening of the tub is too wide, during the washing cycle small cloths may slip and remain entrapped into the air-space between the rotatable drum and the washing tub, with all problems concerned. On the other side, if the gap between the front opening of the drum and the front opening of the tub is too narrow, during the washing cycle the dum may touch the tub and/or the gasket which connects the tub to the outer box casing, with all problems concerned (i.e. wear and tear of the gasket and/or of the tub and/or of the drum, noise, etc.).

The aim of the present invention is therefore to provide an assembly method and an assembly apparatus for assembly the washing group of a front-loading laundry washing machine, which can eliminate the drawbacks referred above with no significant increase in the washing-group production costs.

In compliance with the above aim, according to the present invention there is provided an assembly method of the washing group of a laundry washing machine as specified in Claim 1 and preferably, though not necessarily, in any one of the dependent claims.

It is also disclosed an assembly apparatus according to the invention as specified in Claim 12 and preferably, though not necessarily, in any one of the dependent claims.

A non-limiting embodiment of the present invention will now be described, by way of example, with reference to the accompanying drawings, in which:

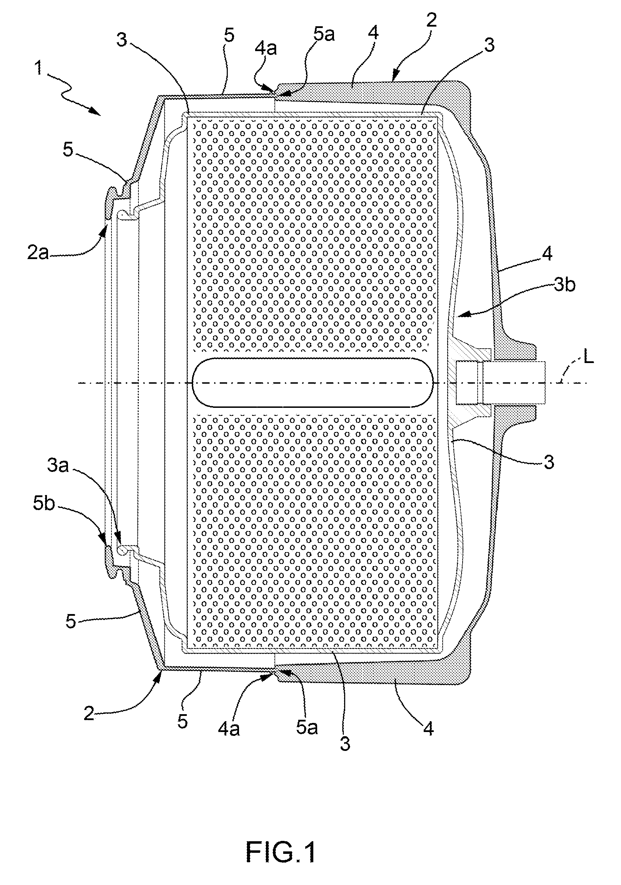

- Figure 1 shows a schematic section view, with parts removed for clarity, of the washing group of a front-loading laundry washing machine realized in accordance with the teachings of the present invention; whereas
- Figures from 2 to 6 show schematically respective different stages of the assembly process of the washing group of Figure 1.

With reference to Figure 1, number 1 indicates as a whole a washing group of a laundry washing machine, namely a front-loading laundry washing machine (but clearly the invention may be applied as well to a front-loading laundry washing and drying machine), which is preferably, but not necessarily, structured for being suspended in floating manner inside the outer boxlike casing (not shown) of the laundry washing machine, and which comprises a washing tub 2, preferably substantially bell-shaped, which is preferably adapted to be suspended in floating manner inside the machine casing in such a way that the front opening 2a of the washing tub 2 directly faces a laundry loading and unloading opening realized in the front face of the machine casing.

The washing group 1 also comprises a rotatable drum 3, adapted for housing the laundry to be washed, which is placed in axially rotatable manner inside the washing tub 2 for rotating about its longitudinal axis L; advantageously the drum 3 is substantially cylindrical and hollow, and it is provided with a front opening 3a.

Advantageously, the rotatable drum 3 is housed inside washing tub 2 so that its front opening 3a is aligned and directly faced to the front opening 2a of washing tub 2, so as to receive the laundry to be washed; and the washing tub 2 is advantageously adapted to be suspended in floating manner inside the machine casing via a suspension system (not shown) which preferably, though not necessarily, comprises a number of coil springs connecting the upper portion of the washing tub 2 to the top of the machine casing, and one or more vibration dampers connecting the lower portion of the washing tub 2 to the bottom of the machine casing.

In addition to the above, rotatable drum 3 is preferably, though not necessarily, housed inside the washing tub 2 so that its longitudinal axis L approximately coincides with the longitudinal axis of washing tub 2.

The rotatable drum 3 is preferably, though not necessarily, made of metal material as, for example, stainless steel; whereas washing tub 2 is made of plastic material and comprises a rear half-shell or section 4, preferably substantially cup-shaped, and a front half-shell or section 5, preferably substantially funnel-shaped, which are welded one another, advantageously without interruptions, via a vibration welding process, so as to be permanently coupled one another in watertight manner.

Advantageously, rear half-shell 4 and front half-shell 5 are aligned to the rotatable drum 3, on opposite sides of the latter, with their respective concavities facing the rotatable drum 3 located in between.

Advantageously the perimetrical annular rim 4a of the rear half-shell 4 abuts to, and is welded, preferably without interruption, to the major annular rim 5a of the front half-shell 5, so as to form a watertight container 2, advantageously substantially barrel-shaped and rigid, which encloses the rotatable drum 3. The minor annular rim 5b of the front half-shell 5, instead, delimits the front opening 2a of the washing tub 2.

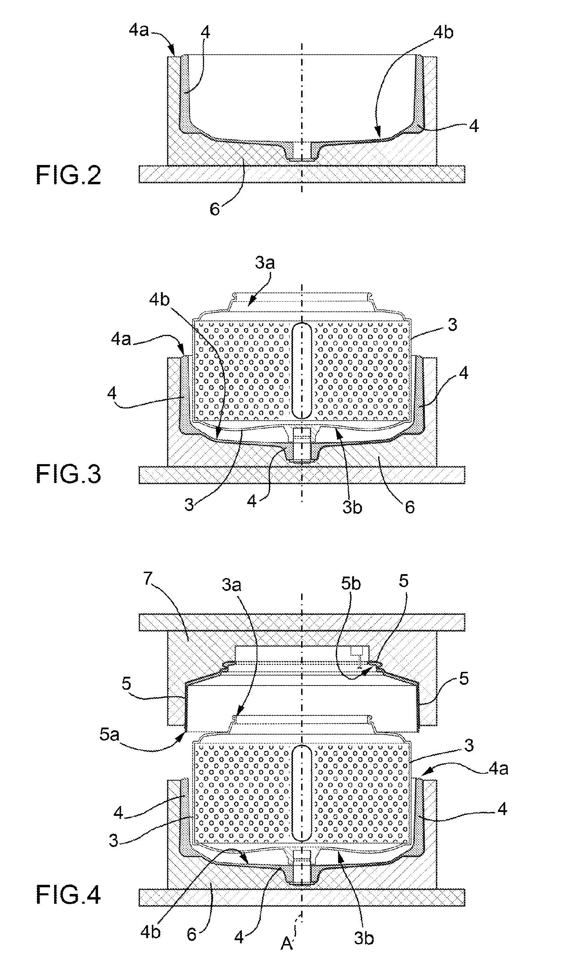

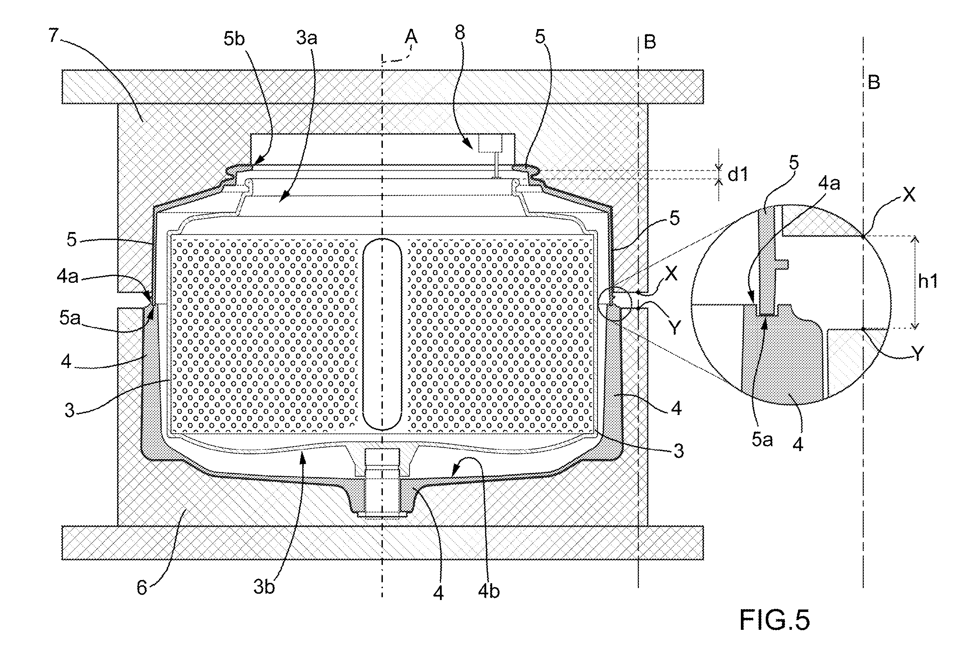

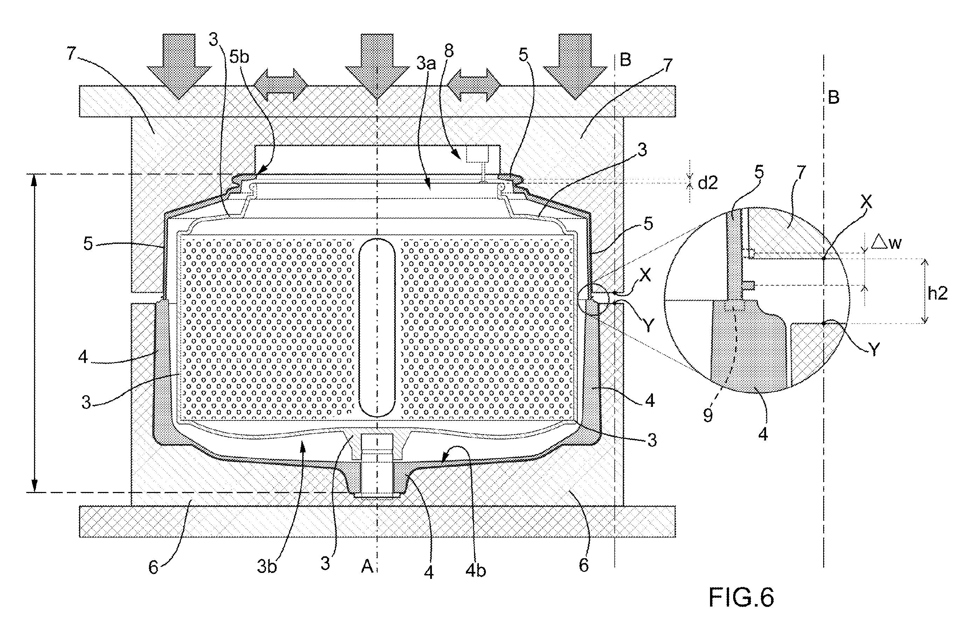

With reference to Figures 2 to 4, the assembly method of washing group 1 is advantageously performed by using an assembly apparatus, only partially and schematically represented in the enclosed figures, comprising a first support template 6 and a second support template 7, which will be better described in the following.

Advantageously, the assembly method of washing group 1 according to the invention comprises the steps/stages of:
- placing (e.g. positioning, immobilizing, fixing) the rear half-shell 4 of the washing tub 2 into the first supporting template 6, which is preferably structured for firmly supporting the rear half-shell 4 in a coupling position in which the perimetrical annular rim 4a of rear half-shell 4 is faced to the outside of the supporting template 6, and the bottom 4b of rear half-shell 4 is faced to the bottom of the supporting template 6, and preferably substantially abuts against the bottom of the supporting template 6;
- fitting/inserting the rotatable drum 3 into the rear half-shell 4 which is placed into the supporting template 6, so that the bottom 3b of rotatable drum 3 directly faces the bottom 4b of rear half-shell 4;
- placing (e.g. positioning, immobilizing, fixing) the front half-shell 5 of the washing tub 2 into the second supporting template 7, which is preferably structured for firmly supporting the front half-shell 5 in a coupling position in which the major annular rim 5a of front half-shell 5 is faced to the outside of supporting template 7, and the minor annular rim 5b of front half-shell 5 is faced to the bottom of the supporting template 7, and preferably substantially abuts against the bottom of supporting template 7.

Advantageously the method according to the invention provides the further step of arranging the supporting templates 6 and 7 so that the rear half-shell 4 placed inside the supporting template 6, and the front half-shell 5 placed inside the supporting template 7 are substantially aligned to a common reference axis A, with the respective concavities of the two half-shells 4 and 5 faced one another.

In the example of figure 4 the assembly method of washing group 1 preferably, though not necessarily, provides for arranging the two supporting templates 6 and 7 so that both rear half-shell 4 and front half-shell 5 are aligned to a common reference axis A; advantageously, in the example of figure 4, the common reference axis A is oriented substantially vertically, and the the concavity of rear half-shell 4 is arranged upwards and the concavity of front half-shell 5 is arranged downwards (however the first and second supporting templates may be arranged in such a way that the concavity of rear half-shell 4 may be arranged downwards and the concavity of front half-shell 5 may be arranged upwards, or also the first and second supporting templates may be arranged in such a way may be arranged in such a way that the common reference axis A is oriented substantially horizontally).

Advantageously the assembly method of washing group 1 provides to move the supporting templates 6 and 7 close to one another, so as to reach a closed position in which the perimetrical annular rim 4a of the rear half-shell 4 is in abutment against the major annular rim 5a of the front half-shell 5, or vice versa, and the rotatable drum 3 is enclosed between the two half-shells 4 and 5.

Then the assembly method of washing group 1 advantageously comprises, before starting a vibration welding process, the further step/stage of:
I. measuring, advantageosuly by a suitable measuring device 8 (e.g. a laser distance detector or other measuring device), the starting distance d1 between the front opening 3a of rotatable drum 3 and the minor annular rim 5b/front opening 2a of the front half-shell 5 placed into the supporting template 7.

In fact the assembly apparatus according to the invention advantageously comprises a measuring device adapted for measuring the distance between the front opening 3a of rotatable drum 3 and the minor annular rim 5b/front opening 2a of the front half-shell 5 of the the washing tub 2 placed into the supporting template 7; advantageously the measuring device is adapted to measure this distance both before the start of the vibration welding process and also during the vibration welding process.

By the measuring of the starting distance d1 it is possible to evaluate, before starting the vibration welding process, if the dimensions of the actual half-shell 4, front half-shell 5 and drum 3 are adapted to obtain, after the vibration welding process, a washing group 1 which fulfils one or more dimensional specifications; in fact, since during the vibration welding process the distance between the front opening 3a of rotatable drum 3 and the minor annular rim 5b/front opening of the front half-shell 5 placed into supporting template 7 decreases, by measuring the starting distance d1 it is possible to evaluate if the value of this distance after its reduction due to the vibration welding process is adapted for obtaining a washing group 1 which fulfils one or more preset dimensional specifications.

For example by measuring the starting distance d1 it is possible to evaluate, before starting the vibration welding process, if after the vibration welding process the gap between the front opening 3a of the drum and the front opening of the tub fulfils a preset dimensional specification (for example being enclosed in a preset dimensional interval).

In this way it is possible to reduce the wastage of material; in fact if the starting distance d1 isn't adapted for obtaining, after the vibration welding process, a washing group 1 which fulfils one or more dimensional specification, this means that one or more among the actual half-shell 4, front half-shell 5 and drum 3 doesn't respect the stated tolerance limits, and has therefore to be discarded; the possibility to detect this fact before starting the vibration welding procedure allows discarding only the component which doesn't respect the stated tolerance limits, while if the non-conformity of the dimesnion is discovered after the vibration welding process, it is necessary to discard the whole washing tub 2, since the half-shell 4 and the front half-shell 5 cant't be separated and reused after their welding.

Advantageously the the assembly method of washing group 1 comprises the further steps/stages of:
II. controlling/checking whether the starting distance d1 fulfils one or more preset specifications (i.e. if this staring distance d1 satisfies one or more dimensional conditions, for example the ones which will be better described in the following);
III. starting, only if the starting distance d1 fulfils these one or more preset specifications, a vibration welding process to weld the rear 4 and the front half-shell 5 one to the other.

In a preferred embodiment the step of controlling/checking whether the starting distance d1 fulfils one or more preset specification comprises controlling/checking, for example by a suitable electronic logic unit, whether the difference ΔK1 (ΔK1 = d1 - Δw) between the starting distance d1 and a predetermined nominal welding distance reduction Δw (for example the nominal welding distance reduction Δw may be equal to 3 millimetres) is included within a predetermined first production tolerance range ΔTR1 (for example the first production tolerance range ΔTR1 may range from 8 to 15 millimetres).

In this case the step of starting, only if the starting distance d1 fulfils the one or more preset specifications, a vibration welding process to weld the rear 4 and the front half-shell 5 one to the other, provides to start, if the difference ΔK1 matches with the first production tolerance range ΔTR1, the vibration welding process to permanently watertight seal the two half-shells 4 and 5 one another (i.e. start vibrating one of the two supporting template 6, 7 in known manner and, at the same time, start pushing the two supporting templates 6 and 7 one against the other).

Clearly if the difference ΔK1 between the starting distance d1 and the predetermined nominal welding distance reduction Δw is not included within the predetermined first production tolerance range ΔTR1, step III is not performed, since this means that at least one among the rotatable drum 3, the rear half-shell 4 and the front half-shell 5 doesn't respect the stated tolerance limits, and has therefore to be discarded.

In a first embodiment of the invention the assembly method of washing group 1 comprises, after performing steps I, II and III, the further step of:
IV. measuring, advantageously by the same measuring device used for measuring the starting distance d1 or also by a different measuring device, the distance between the front opening (3a) of the rotatable drum (3) and the minor annular rim (5b)/front opening of the front half-shell (5) placed into supporting template (7) during the vibration welding procedure.

This advantageously allows stopping the vibration welding process when the distance between the front opening (3a) of the rotatable drum (3) and the minor annular rim (5b)/front opening of the front half-shell (5) placed into supporting template (7) has reached a prefixed value and/or is in a prefixed relationship with the starting distance d1.

Advantageously, in this first embodiment the assembly method according to the invention comprises also the further step of:
IVa. stopping the vibration welding process (i.e. stopping vibrating and pushing the two half-shells 4 and 5 one against the other) when the difference ΔD (ΔD = d1 - d2) between the starting distance d1 between the front opening 3a of rotatable drum 3 and the minor annular rim 5b/front opening of the front half-shell 5, and the current distance d2 between the front opening 3a of rotatable drum 3 and the minor annular rim 5b/front opening of the front half-shell 5, is greater than, or equal to, the predetermined nominal welding distance reduction Δw.

The nominal welding distance reduction Δw is always greater than, or equal to, a minimum distance reduction Δwₘᵢₙ necessary to obtain the requested watertight annular welding bead 9 between the rear half-shell 4 and the front half-shell 5 (for example the minimum distance reduction Δwₘᵢₙ may be equal to 2,8 millimetres).

Advantageously the comparison between the difference ΔD and the nominal welding distance reduction Δw may be actuated by a suitable electronic logic unit, for example the electronic logic unit which commands the welding process.

In a further embodiment of the invention the assembly method of washing group 1 comprises, after performing the above mentioned steps I to III, in addition to performing above mentioned step IV, and instead of performing above mentioned step IVa, the further step of:
IVb. stopping the vibration welding process (i.e. stopping vibrating and pushing the two half-shells 4 and 5 one against the other) when both:
   - the difference ΔD (ΔD = d1 - d2) between the starting distance d1 between the front opening 3a of rotatable drum 3 and the minor annular rim 5b/front opening of the front half-shell 5, and the current distance d2 between the front opening 3a of rotatable drum 3 and the minor annular rim 5b/front opening of the front half-shell 5, is greater than, or equal to, the above-cited nominal welding distance reduction Δw; and
   - the current distance d2 is included within a predetermined second production tolerance range ΔTR2 (for example the second production tolerance range ΔTR2 ranges from 5 to 12 millimetres), whose end values are lower than, or equal to, that of the first production tolerance range ΔTR1.

Also in this embodiment, during the welding process, the current distance d2 may be measured by using the same measuring device used for measuring the starting distance d1 or by a different measuring device. Advantageously the comparison between the difference ΔD and the nominal welding distance reduction Δw, and the comparison between the current distance d2 and the second producyion tolerance range ΔTR2 may be actuated by a suitable electronic logic unit, for example the electronic logic unit which commands the welding process.

Obviously, the reported value of the minimum distance reduction Awₘᵢₙ, the reported end values of first production tolerance range ΔTR1, and the reported end values of second production tolerance range ΔTR2, are to be considered merely indicative.

In another embodiment of the invention, the assembly method according to the invention provides, before performing the above mentioned step III (i.e. after step I and/or after step II), the further step of

IIb. measuring, advantageously by a measuring device, (e.g. a proximity sensor or other measuring device), in the above mentioned closed position, a starting distance h1 between a first referece point Y associated to the first supporting template 6 and a second reference point X associated to the second supporting template 7; advantageously the second reference point X lays, in the closed condition, preferably, but not necessarily, substantiaklly on a same axis B substatially parallel to the above mentioned common reference axis A. In the example illustrated in the enclosed figures, reference points Y and X lay respectively on the perimetrical annular rims of the first and second supporting templates 6 and 7 and are faced one another when the supporting templates 6 and 7 are in the above indicated closed position. However it is clear that reference points Y and X may be substantially any point of the first and second templates respectively (or also points of other elements fixed respectively to the first and second templates, or also points of the rear rear half-shell 4 and of the front-half shell 5 respectively), provied that these first and second reference points Y and X are stationary (i.e. they are placed in a fixed position) with respect to the respective template during the vibration welding process, so that during the vibration welding process the distance between the first and the second reference points varies and can be put in relation to modified reciprocal position of the rear half-shell 4 and the front half-shell 5.

Advantageously, therefore, the assembly apparatus according to the invention comprises a measuring device (for example a proximity sensor or other measuring device) adapted for measuring the distance between the first reference point Y associated to the first supporting template 6 and the second reference point X associated to the second supporting template 7; advantageously this measuring device is adapted for measuring the distance between the first reference point Y and the second reference point X both before the vibration welding process and during the vibration welding process.

Advantageously the possibility to measure the distance between the first reference point Y and the second reference point X during the vibration welding process advantageously allows stopping the vibration welding process when the distance between first reference point Y and the second reference point X has reached a prefixed value and/or is in a prefixed relationship with the starting distance h1.

In this third embodiment the method according to the invention preferably provides to perform, after the steps I, II, IIb and III, and instead of performing above mentioned steps IV, IVa or IVb, the further step of:
IVc. stopping the vibration welding process when the difference ΔH (ΔH = h1-h2) between the starting distance h1 and the current distance h2 between the first point Y and the second point X is greater than, or equal to, the above-cited nominal welding distance reduction Δw.

Likewise the previous embodiments, the nominal welding distance reduction Δw is greater than, or equal to, the minimum distance reduction Δwₘᵢₙ necessary to obtain the requested watertight annular welding bead 9 between the rear half-shell 4 and the front half-shell 5 (for example the minimum distance reduction Δwₘᵢₙ may be equal to 2,8 millimetres).

During the welding process, the current distance h2 may be measured by using the same measuring device used for measuring the starting distance h1, or by a different measuring device. Advantageously the comparison between the difference ΔH and the nominal welding distance reduction Δw may be actuated by a suitable electronic logic unit, for example the electronic logic unit which commands the welding process.

In a further embodiment thereof, the method according to the invention comprises, after performing the above mentioned steps I, II, lib and III, and instead of performing above mentioned steps IV, IVa, IVb or IVc, the further step of:
IVd. stopping the vibration welding process, i.e. stopping vibrating and pushing the two half-shells 4 and 5 one against the other, when both:
   - the difference ΔH (ΔH = h1 - h2) between the above defined starting distance h1 and the current distance h2 is greater than, or equal to, the above-cited nominal welding distance reduction Δw; and
   - the current distance h2 is included within a predetermined fourth production tolerance range ΔTR4 (for example the fourth production tolerance range ΔTR4 may range from 5 to 12 millimetres), whose end values are lower than, or equal to, that of the third production tolerance range ΔTR3.

Also in this embodiment, during the welding process, the current distance h2 may be measured by using the same measuring device used for measuring the starting distance h1, or by a different measuring device. Advantageously the comparison between the difference ΔH and the nominal welding distance reduction Δw, and the comparison between the current distance h2 and the third producyion tolerance range ΔTR3 may be actuated by a suitable electronic logic unit, for example the electronic logic unit which commands the welding process.

In anyone of the above described embodiment after the vibration welding process is stopped, the assembly method of washing group 1 provides to move away the two supporting templates 6 and 7 from one another, so as to remove the washing group 1 from both supporting templates 6 and 7.

The assembly method an the assembly apparatus for assembly the washing group 1 have lots of advantages. First of all the invention allows a precise control of the overall axial length of the washing tub 2, ruling out the risk of a wrong spacing out of the rotatable drum 3 inside the washing tub 2.

Moreover the invention allows reducing the wastage of material and of energy, since it allows evaluating, before starting the vibration welding process, if the washing group which is to be assembled will respect the stated tolerance limits or not.

Clearly, changes may be made to the assembly method and to the assembly apparatus for assembly the washing group 1 as described above without, however, departing from the scope of the present invention.

## Claims

1. Assembly method of the washing group (1) of a laundry washing machine, which comprises a washing tub (2) and a rotatable drum (3), for housing the laundry to be washed, which is placed in axially rotatable manner inside the washing tub (2); the washing tub (2) comprising a rear half-shell (4) and a front half-shell (5), which are made of plastic material and are coupled one another in watertight manner; the assembly method of the washing group (1) comprising the steps of:
- placing the rear half-shell (4) into a first supporting template (6), in a coupling position in which a perimetrical annular rim (4a) of the rear half-shell (4) is faced to the outside of the first supporting template (6);
- fitting/inserting the rotatable drum (3) into the rear half-shell (4) placed into the first supporting template (6), so that the bottom (3b) of the rotatable drum (3) faces the bottom (4b) of the rear half-shell (4);
- placing the front half-shell (5) of the washing tub (2) into a second supporting template (7), in a coupling position in which a major annular rim (5a) of the front half-shell (5) is faced to the outside of the second supporting template (7); and
- arranging the first (6) and second supporting templates (7) so as to put the perimetrical annular rim (4a) of the rear half-shell (4) in abutment against the major annular rim (5a) of the front half-shell (5);
the assembly method of the washing group (1) being **characterized by** also comprising, before starting a vibration welding process, the further step/stage of:
I. measuring the starting distance (d1) between the front opening (3a) of the rotatable drum (3) and the minor annular rim (5b)/front opening of the front half-shell (5) placed into said supporting template (7).

2. Assembly method as claimed in claim 1, further comprising the steps/stages of:
II. controlling/checking whether said starting distance (d1) fulfils one or more preset specifications;
III. starting, only if said starting distance (d1) fulfils said one or more preset specifications, a vibration welding process to weld the rear (4) and the front half-shell (5) one to the other.

3. Assembly method as claimed in claim 2, wherein the step of controlling/checking whether said starting distance (d1) fulfils said one or more preset specification comprises controlling/checking whether a first difference (ΔK1) between said starting distance (d1) and a predetermined nominal welding distance reduction (Δw) is comprised within a predetermined first production tolerance range (ΔTR1);

4. Assembly method as claimed in claim 3, wherein the step of starting, only if said starting distance (d1 fulfils said one or more preset specifications, a vibration welding process to weld the rear (4) and the front half-shell (5) one to the other, provides to start said vibration welding process only if said first difference (ΔK1) matches with said first production tolerance range (ΔTR1).

5. Assembly method as claimed in anyone of the preceding claims, further comprising the step of:
IV. measuring the distance between the front opening (3a) of the rotatable drum (3) and the minor annular rim (5b)/front opening of the front half-shell (5) placed into supporting template (7) during said vibration welding procedure.

6. Assembly method as claimed claim 5, further comprising stopping said vibration welding process when the distance between the front opening (3a) of the rotatable drum (3) and the minor annular rim (5b)/front opening of the front half-shell (5) placed into supporting template (7) has reached a prefixed value and/or is in a prefixed relationship with said starting distance (d1).

7. Assembly method as claimed in claim 6 comprising the step of:
IVa. stopping said he vibration welding process when a second difference (ΔD) between the previously-detected starting distance (d1) and the current distance (d2) between the front opening (3a) of the rotatable drum (3) and the minor annular rim (5b)/front opening of the front half-shell (5) is greater than, or equal to, a nominal welding distance reduction (Δw).

8. Assembly method as claimed in claim 6, comprising the further step of:
IVb. stopping the vibration welding process when both:
- the difference (ΔD) between the starting distance (d1) between the front opening (3a) of rotatable drum (3) and the minor annular rim (5b)/front opening of the front half-shell (5), and the current distance (d2) between the front opening (3a) of rotatable drum (3) and the minor annular rim (5b)/front opening of the front half-shell (5), is greater than, or equal to, said nominal welding distance reduction (Δw); and
- said current distance (d2) is included within a predetermined second production tolerance range (ΔTR2), whose end values are lower than, or equal to, that of said first production tolerance range (ΔTR1).

9. Assembly method as claimed in claim 2 or 3 or 4 or 5, comprising before performing said step III, the further step of:
IIb. Measuring a starting distance (h1) between a first point (Y) of the first supporting template (6) and a second point (X) of the second supporting template (7) in a condition in which said rear half-shell (4) is in abutment against said front half-shell (5) and before starting said vibration welding process.

10. Assembly method as claimed in claim 9, comprising stopping said vibration welding process when the distance between said first reference point (Y) and said second reference point (X) has reached a prefixed value and/or is in a prefixed relationship with said starting distance (h1).

11. Assembly method as claimed in claim 10, comprising, after performing steps I, II, IIb and III, the step of:
IVc. stopping the vibration welding process when the difference (ΔH) between said starting distance (h1) and the current distance (h2) between said first point (Y) and said second point (X) is greater than, or equal to, said nominal welding distance reduction (Δw).

12. Assembly method as claimed in claim 10, comprising, after performing steps I, II, IIb and III, the further step of:
IVd. stopping the vibration welding process when both:
- the difference (ΔH) between said starting distance (h1) and the current distance (h2) between said first point (Y) and said second point (X) is greater than, or equal to, said nominal welding distance reduction (Δw); and
- said current distance (h2) is included within a predetermined fourth production tolerance range (ΔTR4) whose end values are lower than, or equal to, that of the third production tolerance range (ΔTR3).

13. Assembly method as claimed in any one of the previous claims, wherein said nominal welding distance reduction (Δw) is greater than, or equal to, a minimum distance reduction (Δwₘᵢₙ) necessary to obtain a watertight annular welding bead (9) between said rear half-shell (4) and said front half-shell (5).

14. Assembly apparatus for assembly the washing group (1) of a laundry washing machine comprising a washing tub (2) and a rotatable drum (3) placed in axially rotatable manner inside the washing tub (2), the washing tub (2) comprising a rear half-shell (4) and a front half-shell (5) made of plastic material and coupled one another in watertight manner, said assembly apparatus comprising:
- a first supporting template (6) adapted for housing the rear half-shell (4) of the washing tub (2), in a coupling position in which a perimetrical annular rim (4a) of said rear half-shell (4) is faced to the outside of the first supporting template (6) and the rotatable drum (3) is positioned into the rear half-shell (4) so that the bottom (3b) of the rotatable drum (3) faces the bottom (4b) of the rear half-shell (4);
- a second supporting template (7) adapted for housing the front half-shell (5) of the washing tub (2), in a coupling position in which a major annular rim (5a) of the front half-shell (5) is faced to the outside of the second supporting template (7);
said first supporting template (6) and second supporting template (7) being configured for being moved one towards the other until reaching a closed position in which the perimetrical annular rim (4a) of the rear half-shell (4) is in abutment against the major annular rim (5a) of the front half-shell (5), and the rotatable drum (3) is enclosed between the rear and the front half-shells;
said assembly apparatus being **characterized by** comprising
a measuring device adapted for measuring the distance between the front opening (3a) of rotatable drum (3) and the minor annular rim (5b)/front opening (2a) of the washing tub 2.

15. Assembly apparatus, as claimed in claim 14, comprising a measuring device adapted for measuring the distance between a first point (Y) associated to the first supporting template (6) and a second point (X) associated to the second supporting template (7).
